# FASCICULE DE BREVET EUROPEEN

(11) **EP 1 674 194 B1**
(45) Date de publication et mention de la délivrance du brevet: **02.04.2008**
(21) Numéro de dépôt: 04405802.2
(22) Date de dépôt: 24.12.2004
(51) Int. Cl.: B23K 26/42

(54) **Protection extensible munie d'un moyen de détection d'usure, de risque d'inflammation ou de flamme et machine comprenant une telle protection extensible**
Ausdehnbarer Schutz mit Mitteln zur Erkennung der Abnutzung, einer Zündungsgefahr oder einer Flamme und mit dem Schutz versehene Maschine
Extensible protection provided with a means for detection of wear, risk of ignition or flame and machine including such an extensible protection

(43) Date de publication de la demande: 28.06.2006
(73) Titulaire: Bystronic Laser AG, CH-3362 Niederönz (CH)
(72) Inventeur: Plüss, Thomas, 4923 Wynau BE (CH)
(74) Mandataire: EGLI-EUROPEAN PATENT ATTORNEYS

(56) Documents cités:
- US-A1- 2004 211 763
- PATENT ABSTRACTS OF JAPAN vol. 012, no. 021 (M-661), 22 janvier 1988 (1988-01-22) & JP 62 179881 A (TOYODA MACH WORKS LTD), 7 août 1987 (1987-08-07)
- PATENT ABSTRACTS OF JAPAN vol. 2000, no. 21, 3 août 2001 (2001-08-03) & JP 2001 113386 A (AMADA CO LTD), 24 avril 2001 (2001-04-24)

## Description

L'invention s'applique au domaine des machines utilisant un faisceau laser, par exemple des machines de découpe au laser ou des machines de soudure au laser. Dans de telles machines, le faisceau laser est généré par un résonateur, dirigé par une succession d'éléments optiques et appliqué sur la pièce à traiter grâce à une lentille dans laquelle est focalisé le faisceau laser.

Il est connu pour ce genre de machine de focaliser et de diriger le faisceau laser par un jeu d'éléments optiques, par exemples des miroirs, des lentilles ou autres. Dans le cas d'une découpe au laser par exemple, il existe différents types de machines : des machines pour lesquelles le faisceau laser est dirigeable au moins dans le plan (X, Y) de la plaque à découper ; des machines pour lesquelles le faisceau est dirigeable selon un des axes (Y) du plan de la plaque à découper, la plaque étant alors déplaçable selon l'autre axe (X) de ce plan ; des machines pour lesquelles la plaque à découper est déplaçable selon les axes horizontaux X et Y et le faisceau laser est dirigeable selon l'axe vertical Z. Pour ces trois types de machines, la position du faisceau laser est adaptable selon un, deux ou trois axes. Le changement de position correspond à une modification du trajet effectué par le faisceau laser entre les différents éléments optiques. Ainsi, la position du faisceau laser est modifiée par le raccourcissement ou l'allongement du trajet du faisceau laser entre deux éléments optiques consécutifs, ce raccourcissement ou cet allongement étant obtenu par le déplacement relatif en translation des deux éléments optiques consécutifs.

Il est connu également que dans de telles machines, un faisceau laser a une forte énergie pour pouvoir découper par exemple des plaques métalliques de différentes épaisseurs. L'environnement entourant la machine doit être protégé du faisceau laser et pour cela, il est connu d'utiliser des protections, de forme par exemple tubulaire ou sous forme d'un profilé de section en U, entourant le faisceau laser au moins sur un certain secteur angulaire et le long de son trajet entre deux éléments optiques consécutifs. Ces protections sont réalisées avec une paroi protectrice comprenant un ensemble de plis successifs appelé soufflet de façon à être étirées ou rétractées lors du déplacement relatif en translation des deux éléments optiques consécutifs. Le document US-A-2004 0211763 décrit une telle paroi protectrice.

De telles protections peuvent entourer complètement le faisceau laser de façon à contenir un fluide en surpression, par exemple de l'air comprimé ou de l'azote, et conserver tout au long du trajet du faisceau un environnement propre, ce qui optimise la qualité de la propagation du faisceau.

Bien que les éléments optiques soient conçus et positionnés de sorte que, pour un faisceau laser incident reçu dans une première direction, un premier élément optique dirige le faisceau laser dans une deuxième direction vers un deuxième élément optique, il arrive qu'une partie du faisceau laser soit réfléchie par le premier élément optique dans une direction non souhaitée et entre en contact avec la surface interne de la paroi protectrice de la protection à soufflet. Lors de l'impact d'une telle partie de faisceau laser réfléchie sur la paroi protectrice, la protection à soufflet est soumise au point d'impact à une température très élevée, ce qui provoque l'inflammation puis la destruction totale de la protection à soufflet. Une des causes du réfléchissement dans une direction non désirée du faisceau laser peut être due à une succession de réflexions du faisceau laser par les éléments optiques ou encore à une déformation de l'équipement optique. Un tel risque d'inflammation, d'incendie puis de destruction de la protection à soufflet demande une surveillance permanente de la machine, ce qui n'est pas une solution satisfaisante. Il existe d'autres causes de rencontre du faisceau laser avec la protection à soufflet, ce qui provoque rapidement une inflammation.

Un autre problème vient du fait que ces protections à soufflet sont sollicitées en extension-compression de manière très fréquente et qu'au bout d'un certain nombre de sollicitations, la protection à soufflet se détend et risque de se déchirer.

Par ailleurs, un dispositif de détection d'une réflexion incontrolée d'un faisceau laser dans une protection rigide est décrit dans le document JP-A-62179881.

L'invention vient remédier à ces problèmes tout en proposant une réalisation simple d'une protection extensible pour laser.

L'invention concerne une protection extensible selon la revendication 1.

Selon une caractéristique principale de l'invention, un moyen de détection est disposé sur la surface interne de la paroi protectrice. Ce moyen de détection comprend au moins un fil conducteur de courant adapté pour être parcouru par un courant, ce fil étant adapté pour être sectionné à l'issu d'un cycle donné de contraintes mécaniques exercées sur la protection extensible et/ou sous l'action d'une forte température due à l'impact sur ce fil soit d'au moins une partie du faisceau laser soit d'une flamme, ce sectionnement provoquant l'interruption du courant dans le fil permettant la détection d'une usure de la protection extensible et/ou d'un risque d'inflammation ou d'une flamme.

La position du moyen de détection sur la surface interne de la paroi protectrice permet la pose du moyen de détection sur une protection extensible déjà fabriquée, ce qui permet une réalisation simple et séparée de la protection extensible et du moyen de détection.

Grâce à la position du moyen de détection sur la surface interne de la paroi protectrice, la partie réfléchie du faisceau laser peut venir directement au contact du moyen de détection avant d'entrer en contact avec la surface interne de la paroi protectrice. Cette détection qu'une partie du faisceau laser va entrer en contact avec la protection à soufflet est une information qui est immédiatement disponible afin d'éviter l'inflammation. Dans le cas d'un début d'inflammation dans une région de la surface interne qui ne comporte pas le moyen de détection, le feu se propage jusqu'à rencontrer le fil conducteur et provoque son sectionnement par sa fonte. L'inflammation est alors détectée et peut être stoppée. D'autre part, ce fil conducteur permet d'avoir une information d'usure de la paroi protectrice sur laquelle il est fixé, indiquant le moment venu que la paroi protectrice doit être changée.

Selon une réalisation avantageuse, au moins un fil conducteur de courant est fixé à la surface interne de la paroi protectrice et s'étend le long d'au moins une partie du trajet du faisceau laser entre deux éléments optiques.

Selon un aspect de l'invention, le moyen de détection comprend en outre un support pour porter au moins ledit fil conducteur, ce support étant positionné sur la surface interne de la paroi protectrice et s'étendant le long d'au moins une partie du trajet du faisceau laser entre deux éléments optiques.

Selon une première option, le support comprend un ruban.

Selon une deuxième option, le support comprend un filet de forme tubulaire positionné de façon à entourer le faisceau laser.

Avantageusement, le support est confectionné en un matériau extensible.

Avantageusement, au moins le fil conducteur s'étend en forme de lacet de façon à augmenter la partie de la surface interne de la paroi protectrice recouverte par au moins le fil.

A titre d'exemple, le moyen de détection comprend une pluralité de fils conducteurs.

Selon une autre option de l'invention, pour un nombre donné de fils conducteurs reliés d'un côté à un générateur de signal et de l'autre côté un moyen de signalisation, au moins un nombre minimum de ces fils conducteurs est propre à être sectionné à l'issu d'un cycle donné de contraintes mécaniques sur la protection extensible, ce sectionnement provoquant l'interruption du courant dans les fils sectionnés, et sur détection de cette interruption dans au moins le nombre minimum de fils, le générateur de signal est adapté pour générer un signal de détection d'usure dans les fils non sectionnés, le signal de détection d'usure étant indiqué par le moyen de signalisation.

Selon un option supplémentaire de l'invention, le moyen de détection est adapté pour être relié à un moyen d'arrêt, le moyen d'arrêt étant propre à arrêter la génération du faisceau laser lors d'une détection d'une forte température ou d'une détection d'usure.

Avantageusement, la flamme est la conséquence de l'impact sur la surface interne de la paroi protectrice d'au moins une partie du faisceau laser, l'impact sur le fil conducteur ou sur la surface interne de la paroi protectrice d'au moins une partie du faisceau laser est la conséquence d'une réflexion par au moins un des éléments optiques d'au moins une partie du faisceau laser et/ou d'une déformation de la protection à soufflet de telle sorte qu'une partie de la surface interne de la paroi protectrice est située sur le trajet du faisceau laser.

Dans une première réalisation de l'invention, la protection extensible est une protection à soufflet dont la paroi protectrice est formée par une succession de plis dans la direction du trajet du faisceau laser entre les deux éléments optiques, le support d'au moins un fil conducteur étant fixé sur la surface interne de la paroi protectrice de façon à se conformer aux plis successifs.

Dans une deuxième réalisation de l'invention, la protection extensible est une protection sous forme de ressort à spires successives recouvert d'une paroi protectrice extensible. Il est possible d'envisager une autre protection extensible. Au repos, celle-ci est formée par une succession de spires collées les une aux autres recouverte par une paroi souple plissée, la surface interne de la paroi protectrice étant alors définit par la surface interne des spires successives. A l'état d'extension de la protection extensible, la surface interne de la paroi protectrice est définie par la succession d'une spire et d'un morceau de paroi souple.

Optionnellement, la protection sous forme de ressort à spires comprend un ruban muni d'une pluralité de fils conducteurs et fixé à la surface interne de la paroi protectrice selon un chemin en spirales sur au moins une partie du trajet du faisceau laser.

L'invention concerne également une machine utilisant un laser à haute énergie comprenant une protection extensible selon l'invention.

La description détaillée ci-dessous va permettre de mieux comprendre les modes de réalisation de l'invention.

Une machine de découpe ou de soudure au laser comprend un résonateur, une succession d'éléments optiques pour diriger et focaliser le faisceau laser. Dans un exemple de réalisation, le faisceau laser est dirigé à la sortie du résonateur sur un premier miroir disposé de façon à rediriger le faisceau sur un second miroir, qui redirige le faisceau sur un troisième miroir, qui redirige le faisceau sur une lentille permettant la focalisation du faisceau sur la pièce à découper en une position souhaitée. On distinguera par la suite le trajet entre le premier et le second miroir comme étant le premier trajet, et le trajet entre le second et le troisième miroir comme étant le deuxième trajet.

Il est connu de protéger l'environnement extérieur du danger que représente le faisceau laser à haute énergie sur au moins le premier et le deuxième trajet par des protections à soufflet. Lorsque ces protections sont entièrement fermées, elles peuvent également servir à maintenir un environnement propre autour du faisceau laser et optimiser la qualité de la propagation du faisceau.

Chaque protection à soufflet comprend une paroi protectrice entourant le faisceau laser au moins sur un certain secteur angulaire et le long d'au moins une partie du trajet du faisceau laser entre deux éléments optiques, cette paroi protectrice ayant une surface interne disposée en vis-à-vis du faisceau laser. La paroi protectrice est formée par une succession de plis dans la direction du trajet du faisceau laser entre les deux éléments optiques. L'avantage connu de cette succession de plis est de permettre d'adapter la longueur de la protection à soufflet à la longueur désirée du trajet du faisceau laser entre les deux éléments optiques. Ces protections à soufflet peuvent être suspendues par des éléments d'accroche à une tringle de façon à être déplaçables en translation le long du trajet du faisceau laser. Ce type de protection à soufflet est connu de l'art antérieur et ne sera pas détaillé plus avant.

Sur un trajet entre deux éléments optiques, par exemple deux miroirs, la protection à soufflet disposée entre ces deux éléments optiques peut être constituée soit par une unique paroi protectrice s'étendant sur la totalité du trajet entre les deux éléments optiques, soit par une pluralité de segments de paroi protectrice reliés les uns aux autres de façon à former une protection à soufflet continue entre les deux éléments optiques. Chaque protection à soufflet est alors adaptable sur au moins une partie du trajet d'un faisceau laser entre deux éléments optiques.

On parlera plus généralement de protection extensible dans le reste de la description, puisque l'invention peut s'appliquer à une protection sous forme d'un ressort à spires successives recouvert d'une paroi protectrice extensible. Cette protection à ressort est positionnée de façon à entourer le faisceau laser sur une partie au moins de son trajet entre deux éléments optiques. Ainsi, la protection peut être étirée ou rétrécie en fonction de la longueur du trajet du faisceau laser.

Il peut arriver qu'une partie du faisceau laser qui arrive sur le second miroir est réfléchie par ce second miroir dans une direction telle que la partie réfléchie du faisceau laser entre en contact avec la paroi protectrice de la protection extensible du premier trajet. Il peut également arriver qu'une partie du faisceau soit réfléchie successivement par des miroirs ultérieurs sur le trajet du faisceau laser, arrive sur le second miroir et soit réfléchi par ce second miroir selon un angle de réflexion de sorte que la partie réfléchie du faisceau laser entre en contact avec la paroi protectrice de la protection extensible. Il peut également arriver qu'une déformation de la protection extensible soit de telle sorte qu'une partie de la surface interne de la paroi protectrice est située sur le trajet du faisceau laser. La déformation de la protection extensible peut être provoquée par différents facteurs : un ou plusieurs des éléments d'accroche à la tringle de la protection extensible se décroche ou se casse ; lors de l'extension de la protection extensible, au moins un pli dirigé vers l'extérieur est pressé vers l'intérieur de la protection extensible par contact avec un élément extérieur à la protection extensible, ce qui provoque une inversion du pli lors de la compression de la protection extensible. D'autres facteurs peuvent être également envisagées.

Dans ces cas de rencontre d'au moins une partie du faisceau laser avec la paroi protectrice, qui peuvent se cumuler, une inflammation de la paroi protectrice commence fait de l'impact de la partie réfléchie du faisceau laser à haute énergie sur la paroi protectrice.

Un autre problème se pose, celui de la détection de l'usure de la protection extensible.

Un moyen de détection est ainsi placé entre la surface interne de la paroi protectrice et le faisceau laser. Ce moyen de détection peut servir pour détecter le risque d'inflammation, la présence de flamme et/ou l'usure de la protection extensible.

Dans le cas d'un impact direct sur le moyen de détection d'une partie du faisceau laser, cet impact peut être détecté avant l'impact de cette partie du faisceau laser sur la surface interne de la paroi protectrice. Dans ce cas, le moyen de détection détecte ainsi le risque d'inflammation avant que l'inflammation n'apparaisse.

Dans le cas d'une inflammation dans une région de la surface interne qui ne comporte pas le moyen de détection, le feu se propage jusqu'à rencontrer le fil conducteur et provoquer son sectionnement, ou plus précisément sa fonte. L'incendie est alors détectée et peut être stoppée. Il peut être intéressant de positionner le moyen de détection au point le plus haut de la surface interne de la paroi protectrice. En effet, les flammes se propageant vers le haut, cette position permet de limiter la partie de la paroi protectrice qui est déjà brûlée avant la détection de l'incendie.

Ce moyen de détection est avantageusement positionné sur la surface interne de la paroi de protection et fixé à cette surface interne par un moyen de fixation comme par exemple de la colle ou autre.

Le moyen de détection peut être relié à un moyen de signalisation (alarme visuelle ou sonore) qui signale lorsqu'une détection selon l'invention a eu lieu. Un opérateur peut alors agir sur le faisceau laser dans le cas d'une détection d'un risque l'inflammation ou de flamme (incendie) ou changer la protection extensible dans le cas d'une détection d'usure. Le moyen de détection peut être également relié à un moyen d'arrêt de génération du faisceau laser. Lors d'une détection de risque d'inflammation ou de flamme et/ou d'usure de la protection extensible par le moyen de détection, le moyen d'arrêt arrête immédiatement la génération du faisceau laser.

Le moyen de détection peut également être relié un générateur de signal dont l'utilité est développée ci-après.

Il est possible de réaliser un moyen de détection de différentes façons.

Une première façon consiste à utiliser un fil conducteur de courant positionné sur la surface interne de la paroi protectrice et s'étendant le long d'au moins une partie du trajet du faisceau laser entre deux éléments optiques. Lors de la génération du faisceau laser et du fonctionnement normal de la machine à découper (ou souder), les extrémités de ce fil sont reliées à un générateur de courant appelé également générateur de signal. Dans le cas où une partie du faisceau laser entre en contact avec la surface interne de la paroi protectrice (par exemple par déformation de la protection extensible dont la surface interne croise le trajet du faisceau laser et/ou par réflexion d'une partie au moins du faisceau laser par exemple par les éléments optiques), une inflammation de la paroi protectrice débute et les flammes atteignent le fil conducteur qui est sectionné sous l'action de la forte température de la flamme. Dans le cas où au moins une partie du faisceau laser entre en contact directement avec le fil conducteur, le fil conducteur est sectionné sous l'action de la forte température due à l'impact d'une partie du faisceau laser. Ce sectionnement provoque l'interruption du courant dans le fil. Cette interruption permet la détection d'une flamme, c'est-à-dire d'un incendie déclaré sur la paroi protectrice ou d'un risque d'inflammation de la paroi protectrice.

Sous de fortes températures comme la température d'une flamme et la température d'une partie du faisceau laser, il est prévu de disposer d'un fil conducteur par exemple en cuivre de faible diamètre de manière à ce que celui-ci fonde en un temps court (par exemple de l'ordre d'une seconde ou d'une fraction de seconde). Ainsi, le temps de détection d'un risque d'inflammation ou d'une flamme est optimisé.

Dans le cas de la détection de l'usure de la protection extensible, le fil conducteur est sectionné après un cycle de contraintes mécaniques appliquées sur la protection extensible, par exemple un certain nombre de contraintes de type extension-rétrécissement de la protection extensible le long du trajet du faisceau laser. Ces contraintes mécaniques sont des contraintes de traction-compression successives, par exemple sur les parties de fil rectilignes, et/ou des contraintes de torsion. Un faible diamètre de fil est adapté à cette détection d'usure de la protection extensible sous sollicitations de fatigue.

Il est possible de mettre en place une pluralité de fils conducteurs rectilignes sur la surface interne de la paroi protectrice et ceci sur une section angulaire choisie autour du faisceau laser de façon à accroître les endroits de détection. Dans une variante de réalisation, il est également possible de disposer un fil conducteur s'étendant en forme de lacet sur la surface interne de la paroi protectrice et ceci sur une section angulaire choisie autour du faisceau laser. La forme du lacet peut avoir pour direction principale la direction du trajet du faisceau laser. Dans une variante de la forme du lacet, le fil conducteur s'étend de façon rectiligne dans le sens du trajet du faisceau laser avant de revenir dans le sens inverse et ceci plusieurs fois d'affiler de façon à s'étendre sur une section angulaire choisie autour du faisceau laser. Ces variantes permettent d'augmenter la partie de la surface interne de la paroi protectrice recouverte par le fil.

Il est possible d'utiliser une pluralité de fils conducteurs soumis chacun à un courant électrique, le sectionnement d'un de ces fils servant d'interrupteur et permettant la détection de flamme, d'un risque d'inflammation ou de l'usure de la protection extensible.

Dans le cas de la détection d'usure, un nombre donné de fils conducteurs est relié d'un côté à un générateur de signal et de l'autre côté à un moyen de signalisation. Certains fils conducteurs peuvent être sectionnés avant la fin d'un cycle donné de contraintes mécaniques sur la protection extensible. Il peut être alors intéressant de définir un critère d'usure. Ce critère d'usure peut être un nombre de fils conducteurs qui doivent être sectionnés pour pouvoir déterminer que la protection extensible a atteint une usure suffisante et doit être changée. A titre d'exemple, si le nombre de fil conducteur est de 10, le critère d'usure est de 5 fils. Cela signifie que lorsque 5 de ces fils conducteurs sont sectionnés, il est considéré que la protection extensible a atteint une usure suffisante pour être changée. Ce sectionnement provoque l'interruption du courant dans ces fils 5 sectionnés et, sur détection de cette interruption de courant dans 5 fils, le moyen de génération de signal génère un signal de détection d'usure dans les fils non sectionnés. Le signal de détection d'usure est alors indiqué par le moyen de signalisation sous la forme d'une alarme visuelle ou sonore. Le signal de détection d'usure peut être un signal numérique transportant des informations. Ce signale peut être transmis au moyen d'arrêt et provoquer l'arrêt de la génération du faisceau laser.

Le ou les fils conducteurs peuvent être portés par un support positionné sur la surface interne de la paroi protectrice et s'étendant le long d'au moins une partie du trajet du faisceau laser entre deux éléments optiques.

Ce support peut être un ruban. Selon la largeur du ruban, il est possible de disposer plusieurs rubans, leur dimension la plus grande s'étendant le long d'une partie au moins du trajet du faisceau laser entre les deux éléments optiques, les rubans étant disposés autour du faisceau laser.

Dans le cas d'une protection sous forme de ressort à spires, un ruban peut être fixée à la surface interne de la paroi protectrice et s'étendre selon un chemin rectiligne ou selon un chemin en spirales le long du trajet du faisceau laser et fixé à la surface interne de la paroi protectrice.

Dans le cas d'une protection extensible sous forme de ressort à spires de section transversale circulaire, le chemin en spirale du ruban est plus particulièrement de forme hélicoïdale. Il peut être envisageable d'avoir une protection extensible sous forme d'un ressort à spires de section transversale carrée ou de toute autre forme géométrique, le ruban étant positionné sur la surface interne, s'adaptant à la forme de la section transversale et formant une succession de spires le long de la protection extensible. Cette façon de positionner le ruban permet de recouvrir toute la surface interne de la paroi protectrice.

Ce support peut également être un filet de forme tubulaire, positionné sur la surface interne de la paroi protectrice de façon à entourer le faisceau laser et s'étendant le long d'au moins une partie du trajet du faisceau laser entre deux éléments optiques.

Le support du ou des fils conducteurs peut être fabriqué en un matériau extensible, en fibres naturelles et/ou en fibres synthétiques.

La paroi protectrice est formée par une succession de plis dans la direction du trajet du faisceau laser entre les deux éléments optiques. Le support du ou des fils conducteurs est fixé sur la surface interne de la paroi protectrice de façon à se conformer aux plis successifs.

L'invention concerne également la machine utilisant un laser à haute énergie telle une machine de soudure ou de découpe au laser comprenant une protection extensible avec un détecteur selon l'invention.

L'invention ne se limite pas aux modes de réalisations décrits mais englobe tout autre variante couverte par les revendications.

## Revendications

1. Protection extensible pour recouvrir un faisceau à haute énergie de type laser sur au moins une partie de son trajet entre deux éléments optiques, ladite protection extensible comprenant une paroi protectrice munie d'une surface interne disposée en vis-à-vis du faisceau laser, **caractérisé en ce qu**'un moyen de détection comprend au moins un fil conducteur de courant adapté pour être parcouru par un courant, ce moyen de détection est disposé sur la surface interne de la paroi protectrice de sorte que, lors de la propagation de l'inflammation de la paroi protectrice, le fil est sectionné du à l'impact sur ce fil d'une flamme, ce sectionnement provoquant l'interruption du courant dans le fil permettant la détection de la flamme.

2. Protection extensible selon la revendication 1, **caractérisée en ce qu**'au moins un fil conducteur de courant est fixé à la surface interne de la paroi protectrice et s'étend le long d'au moins une partie du trajet du faisceau laser entre deux éléments optiques.

3. Protection extensible selon la revendication 2, **caractérisée en ce que** le moyen de détection comprend en outre un support pour porter au moins ledit fil conducteur, ce support étant positionné sur la surface interne de la paroi protectrice et s'étendant le long d'au moins une partie du trajet du faisceau laser entre deux éléments optiques.

4. Protection extensible selon les revendications 2 et 3, **caractérisée en ce que** le support comprend un ruban.

5. Protection extensible selon les revendications 2 et 3, **caractérisée en ce que** le support comprend un filet de forme tubulaire positionné de façon à entourer le faisceau laser.

6. Protection extensible selon l'une des revendications précédentes, **caractérisée en ce que** le support est confectionné en un matériau extensible.

7. Protection extensible selon l'une des revendications 2 à 6, **caractérisée en ce qu'**au moins le fil conducteur s'étend en forme de lacet de façon à augmenter la partie de la surface interne de la paroi protectrice recouverte par au moins le fil.

8. Protection extensible selon l'une des revendications 2 à 7, **caractérisée en ce que** le moyen de détection comprend une pluralité de fils conducteurs.

9. Protection à extensible selon l'un des revendications précédentes, **caractérisée en ce que** pour un nombre donné de fils conducteurs reliés d'un côté à un générateur de signal et de l'autre côté un moyen de signalisation, au moins un nombre minimum de ces fils conducteurs est propre à être sectionné à l'issu d'un cycle donné de contraintes mécaniques sur la protection extensible, ce sectionnement provoquant l'interruption du courant dans les fils sectionnés, et sur détection de cette interruption dans au moins le nombre minimum de fils, le générateur de signal est adapté pour générer un signal de détection d'usure dans les fils non sectionnés, le signal de détection d'usure étant indiqué par le moyen de signalisation.

10. Protection à extensible selon l'une des revendications précédentes, **caractérisée en ce que** le moyen de détection est adapté pour être relié à un moyen d'arrêt, le moyen d'arrêt étant propre à arrêter la génération du faisceau laser lors d'une détection d'une flamme ou d'une détection d'usure.

11. Protection extensible selon l'une des revendications précédentes, **caractérisée en ce que** la flamme est la conséquence de l'impact sur la surface interne de la paroi protectrice d'au moins une partie du faisceau laser et **en ce que** l'impact sur la surface interne de la paroi protectrice d'au moins une partie du faisceau laser est la conséquence d'une réflexion par au moins un des éléments optiques d'au moins une partie du faisceau laser et/ou d'une déformation de la protection à soufflet de telle sorte qu'une partie de la surface interne de la paroi protectrice est située sur le trajet du faisceau laser.

12. Protection extensible selon l'une des revendications précédentes, **caractérisée en ce que** la protection extensible est une protection à soufflet dont la paroi protectrice est formée par une succession de plis dans la direction du trajet du faisceau laser entre les deux éléments optiques, le support d'au moins un fil conducteur étant fixé sur la surface interne de la paroi protectrice de façon à se conformer aux plis successifs.

13. Protection à extensible selon l'une des revendications 1 à 11, **caractérisée en ce que** la protection extensible est une protection sous forme de ressort à spires successives recouvert d'une paroi protectrice extensible.

14. Protection à extensible selon la revendication 13, **caractérisée en ce que** la protection sous forme de ressort à spires successives comprend un ruban muni d'une pluralité de fils conducteurs et fixé à la surface interne de la paroi protectrice selon un chemin en spirales sur au moins une partie du trajet du faisceau laser.

15. Machine utilisant un laser à haute énergie comprenant une protection extensible selon l'une des revendications 1 à 14.

## Claims

1. An expandable protection for covering a high-energy laser type beam on at least one part of its path between two optical elements, said expandable protection comprising a protective wall equipped with an inner surface disposed facing the laser beam, **characterized in that** a detection means comprises at least one current-conducting wire designed for being flowed through by a current, this detection means is disposed on the inner surface of the protective wall so that, during propagation of the ignition of the protective wall, the wire is cut due to the impact on this wire of a flame, this cutting causing current in the wire to be interrupted, allowing detection of the flame.

2. The expandable protection according to claim 1, **characterized in that** at least one current-conducting wire is fixed to the inner surface of the protective wall and extending along at least one part of the path of the laser beam between two optical elements.

3. The expandable protection according to claim 2, **characterized in that** the detection means comprises, in addition, a support to carry at least said conductive wire, this support being positioned on the inner surface of the protective wall and extending along at least one part of the path of the laser beam between two optical elements.

4. The expandable protection according to claims 2 and 3, **characterized in that** the support comprises a tape.

5. The expandable protection according to claims 2 and 3, **characterized in that** the support comprises a net in tubular form positioned so as to surround the laser beam.

6. The expandable protection according to one of the previous claims, **characterized in that** the support is made of an expandable material.

7. The expandable protection according to one of claims 2 to 6, **characterized in that** at least the conductive wire extends in string form so as to increase the part of the inner surface of the protective wall covered by at least the wire.

8. The expandable protection according to one of claims 2 to 7, **characterized in that** the detection means comprises a plurality of conductive wires.

9. The expandable protection according to one of the previous claims, **characterized in that** for a given number of conductive wires connected from one side to a signal generator and from the other side to a signaling means, at least a minimum number of these conductive wires is specific to being cut after a given cycle of mechanical stresses on the expandable protection, this cutting causing the current in the cut wires to be interrupted, and upon detecting this interruption in at least the minimum number of wires, the signal generator is designed to generate a wear detection signal in the uncut wires, the wear detection signal being indicated by the signaling means.

10. The expandable protection according to one of the previous claims, **characterized in that** the detection means is designed to be connected to a stopping means; the stopping means being specific to stopping the generation of the laser beam when a flame or wear is detected.

11. The expandable protection according to one of the previous claims, **characterized in that** the flame is the consequence of the impact on the inner surface of the protective wall of at least one part of the laser beam and **in that** the impact on the inner surface of the protective wall of at least one part of the laser beam is the consequence of a reflection by at least one of the optical elements of at least one part of the laser beam and/or of deformation of the bellows protection such that one part of the inner surface of the protective wall is situated on the path of the laser beam.

12. The expandable protection according to one of the previous claims, **characterized in that** the expandable protection is a bellows protection wherein the protective wall is formed by a succession of folds in the direction of the path of the laser beam between the two optical elements, the support of at least one conductive wire being fixed on the inner surface of the protective wall so as to conform to the successive folds.

13. The expandable protection according to one of claims 1 to 11, **characterized in that** the expandable protection is a protection in the form of a spring with successive turns covered by an expandable protective wall.

14. The expandable protection according to claim 13, **characterized in that** the protection in the form of a spring with successive turns comprises a tape equipped with a plurality of conductive wires fixed to the inner surface of the protective wall according to a spiral lane on at least one part of the path of the laser beam.

15. A machine utilizing a high-energy laser comprising an expandable protection according to one of claims 1 to 14.

## Patentansprüche

1. Dehnbare Schutzvorrichtung zum Abdecken eines Hochenergiestrahls des Typs Laser auf mindestens einem Teil seines Verlaufs zwischen zwei optischen Elementen, wobei die dehnbare Schutzvorrichtung eine Schutzwand aufweist, die mit einer Innenfläche versehen ist, die dem Laserstrahl gegenüber angeordnet ist, **dadurch gekennzeichnet, dass** ein Erfassungsmittel mindestens einen Strom leitenden Draht aufweist, der von einem Strom durchlaufen werden kann, wobei dieses Erfassungsmittel auf der Innenfläche der Schutzwand so angeordnet ist, dass beim Ausbreiten des Entflammens der Schutzwand der Stromdraht aufgrund des Aufprallens einer Flamme auf diesen Draht durchtrennt wird, wobei dieses Durchtrennen das Unterbrechen des Stroms in dem Draht verursacht und das Erfassen der Flamme erlaubt.

2. Dehnbare Schutzvorrichtung nach Anspruch 1, **dadurch gekennzeichnet, dass** mindestens ein Strom leitender Draht an der Innenfläche der Schutzwand befestigt wird und sich entlang mindestens eines Teils des Verlaufs des Laserstrahls zwischen zwei optischen Elementen erstreckt.

3. Dehnbare Schutzvorrichtung nach Anspruch 2, **dadurch gekennzeichnet, dass** das Erfassungsmittel ferner einen Träger aufweist, um zumindest den Stromdraht zu tragen, wobei dieser Träger auf der Innenfläche der Schutzwand positioniert ist und sich entlang mindestens eines Teils des Verlaufs des Laserstrahls zwischen zwei optischen Elementen erstreckt.

4. Dehnbare Schutzvorrichtung nach Anspruch 2 und 3, **dadurch gekennzeichnet, dass** der Träger ein Band aufweist.

5. Dehnbare Schutzvorrichtung nach den Ansprüchen 2 und 3, **dadurch gekennzeichnet, dass** der Träger ein röhrenförmiges Netz aufweist, das so positioniert ist, dass es den Laserstrahl umgibt.

6. Dehnbare Schutzvorrichtung nach einem der vorhergehenden Ansprüche, **dadurch gekennzeichnet, dass** der Träger aus einem dehnbaren Material hergestellt ist.

7. Dehnbare Schutzvorrichtung nach einem der Ansprüche 2 bis 6, **dadurch gekennzeichnet, dass** sich der Stromdraht mindestens in Windungsform derart erstreckt, dass der Teil der Innenfläche der Schutzwand, der von mindestens dem Stromdraht abgedeckt wird, vergrössert ist.

8. Dehnbare Schutzvorrichtung nach einem der Ansprüche 2 bis 7, **dadurch gekennzeichnet, dass** das Erfassungsmittel mehrere Stromdrähte aufweist.

9. Dehnbare Schutzvorrichtung nach einem der vorhergehenden Ansprüche, **dadurch gekennzeichnet, dass** für eine gegebene Anzahl von Stromdrähten, die auf einer Seite mit einem Signalgenerator und auf der anderen mit einem Signalisierungsmittel verbunden sind, zumindest eine Mindestanzahl dieser Stromdrähte nach einem gegebenen Zyklus mechanischer Belastungen auf der dehnbaren Schutzvorrichtung durchtrennt werden kann, wobei dieses Durchtrennen das Unterbrechen des Stroms in den durchtrennten Drähten verursacht, und dass bei Erfassen dieser Unterbrechung in mindestens der Mindestanzahl von Drähten der Signalgenerator ein Verschleisserfassungssignal in den nicht unterbrochenen Stromdrähten erzeugen kann, wobei das Verschleisserfassungssignal durch das Signalisierungsmittel angezeigt wird.

10. Dehnbare Schutzvorrichtung nach einem der vorhergehenden Ansprüche, **dadurch gekennzeichnet, dass** das Erfassungsmittel mit einem Stoppmittel verbunden werden kann, wobei das Stoppmittel das Erzeugen des Laserstrahls bei einem Erfassen einer Flamme oder bei einem Verschleisserfassen stoppen kann.

11. Dehnbare Schutzvorrichtung nach einem der vorhergehenden Ansprüche, **dadurch gekennzeichnet, dass** die Flamme die Folge des Aufprallens auf der Innenfläche der Schutzwand mindestens eines Teils des Laserstrahls ist, und dass das Aufprallen auf der Innenfläche der Schutzwand mindestens eines Teils des Laserstrahls die Folge einer Reflexion durch mindestens eines der optischen Elemente mindestens eines Teils des Laserstrahls und/oder einer Verformung der Balgschutzvorrichtung derart ist, dass ein Teil der Innenfläche der Schutzwand auf dem Verlauf des Laserstrahls liegt.

12. Dehnbare Schutzvorrichtung nach einem der vorhergehenden Ansprüche, **dadurch gekennzeichnet, dass** die dehnbare Schutzvorrichtung eine Balgschutzvorrichtung ist, deren Schutzwand aus einer Abfolge von Falten in die Richtung des Verlaufs des Laserstrahls zwischen den zwei optischen Elementen ausgebildet ist, wobei der Träger mindestens eines Stromdrahts auf der Innenfläche der Schutzwand derart befestigt ist, dass er den aufeinander folgenden Falten folgt.

13. Dehnbare Schutzvorrichtung nach einem der Ansprüche 1 bis 11, **dadurch gekennzeichnet, dass** die dehnbare Schutzvorrichtung eine Schutzvorrichtung in Form einer Feder mit aufeinander folgenden Windungen ist, die von einer dehnbaren Schutzwand abgedeckt wird.

14. Dehnbare Schutzvorrichtung nach Anspruch 13, **dadurch gekennzeichnet, dass** die Schutzvorrichtung in Form einer Feder mit aufeinander folgenden Windungen ein Band aufweist, das mit mehreren Stromdrähten versehen und an der Innenfläche der Schutzwand entlang eines Wegs in Spiralen auf mindestens einem Teil des Verlaufs des Laserstrahls befestigt ist.

15. Maschine, die einen Hochenergielaser verwendet, der eine dehnbare Schutzvorrichtung nach einem der Ansprüche 1 bis 14 verwendet.
